# EUROPEAN PATENT APPLICATION

(11) **EP 4 613 820 A1**
(43) Date of publication of application: **10.09.2025**
(21) Application number: 24161532.7
(22) Date of filing: 05.03.2024
(51) Int. Cl.: C09D 5/16

(54) **APPLICATION OF A BIOCIDE-CONTAINING FOULING CONTROL COMPOSITION BY ELECTROSTATIC SPRAYING**

(71) Applicant: PPG Coatings Europe B.V., 1047 BB Amsterdam (NL)
(72) Inventor: ADEMA, Bert, 1047 BB Amsterdam (NL); DE BOER, Jan, 1047 BB Amsterdam (NL); VAN HELMOND, Joanna, 1047 BB Amsterdam (NL); THOUEZ, Julie Nadége Bénédicte, 1047 BB Amsterdam (NL); PEDERSEN, Martin Ole, 1047 BB Amsterdam (NL); SCHONEVELD, Peter, 1047 BB Amsterdam (NL); AFONSO REIS TEIXEIRA, Sara Vanessa, 1047 BB Amsterdam (NL); VISSER, Sijmen, 1047 BB Amsterdam (NL)
(74) Representative: f & e patent

(57) **Abstract**

The disclosure provides a process for applying a biocide-containing fouling control composition onto at least a part of an underwater structure by electrostatic spraying, wherein the fouling control composition is free of copper or contains copper in an amount of less than 5 wt. %, based on the total weight of the fouling control composition.

## Description

### TECHNICAL FIELD

The present disclosure relates to the application of biocide-containing fouling control compositions onto underwater structures.

### BACKGROUND

Coating compositions formulated to prevent or reduce the adhesion of fouling organisms to surfaces are well known in the art. Areas where such coatings are of particular interest are those where a surface is exposed to water, wherein the water contains fouling organisms that will adhere to the surface, thus fouling the surface of the underwater structure.

Traditionally, there have been two ways that a coating composition can be designed to effectively reduce or prevent the adhesion and build-up of fouling organisms on a surface of an underwater structure. Self-polishing antifouling coatings containing a biocide agent which serves to physiologically disrupt the fouling organism and degrading slowly over time thus releasing biocide, and fouling release coatings having a very slippery surface onto which fouling organisms have difficulty attaching. In antifouling coatings, copper-containing biocides, such as cuprous oxide and copper pyrithione are still among the most frequently used biocide agents.

The adhesion of fouling organisms, such as barnacles on underwater structures causes drastic damages to such structures, for example by destroying protective coatings and thereby accelerating the corrosion of the surface. If the surface is, for example, the hull of a ship, the adhesion further causes an increase in frictional resistance, which leads to drastic reduction in the fuel efficiency causing increasing fuel consumption and greenhouse gas emissions as well as reduced speed of the ship.

Consequently, fouling control coatings are essential to reduce such drawbacks and avoid cost-intensive surface cleaning and maintenance of underwater structures. Due to the complexity of many underwater structures, the coating process is often challenging and requires elaborate and time-consuming coating methods in docking stations.

Therefore, there is an ongoing demand to develop efficient, cost-effective and user-friendly processes for the application of fouling control compositions.

### SUMMARY

The present disclosure is directed to a process for applying a biocide-containing fouling control composition onto at least a part of an underwater structure by electrostatic spraying, wherein the fouling control composition is free of copper or contains copper in an amount of less than 5 wt. %, based on the total weight of the fouling control composition.

The present disclosure also relates to the use of a biocide-containing fouling control composition which is free of copper or contains copper in an amount of less than 5 wt. %, based on the total weight of the fouling control composition, for application onto at least a part of an underwater structure by electrostatic spraying.

In addition, the present disclosure concerns a coated underwater structure obtainable by applying a fouling control composition onto at least a part of the underwater structure by electrostatic spraying according to the process described above.

### DETAILED DESCRIPTION

Surprisingly, it has been found by the present inventors that biocide-containing fouling control compositions can easily be applied by electrostatic spraying, if a copper-containing biocide is avoided or present in minor amounts which are typically less than the amounts in which a copper-containing biocide is generally used in a fouling control composition. The great advantage of the high transfer efficiency of the electrostatic spraying process can thus be exploited.

The term "fouling control composition" as used herein, refers to a coating composition which prevents or reduces the adhesion of fouling organisms, such as micro-organisms, plants, and small animals, to a surface. According to the present disclosure, the fouling control composition may be an antifouling composition, a self-polishing composition, a fouling release composition or a combination thereof.

The term "antifouling composition" as used herein, refers to a coating composition containing a biocide agent, which serves to physiologically disrupt fouling organisms that adhere or are about to adhere to a surface. This process can occur prior to, during or after adhesion of the organism to the surface.

The term "self-polishing composition" as used herein, refers to a coating composition which is designed to slowly degrade over time, thereby causing the fouling organisms adhered to the coated surface to gradually fall off the surface during the degradation of the coating. These coatings may work by having a binder that slowly hydrolyses upon contact with water, resulting in a controlled degradation of the coating. Such coatings are referred to as self-polishing coatings or ablative coatings.

The term "fouling release composition" as used herein, refers to a coating composition, which, when applied, forms a very smooth, slippery, and low-friction surface onto which fouling organisms have difficulty attaching. Any organisms which do attach to the coated surface often do so only weakly and can usually be easily removed, for example with water washing over the coated surface.

The fouling control composition according to the present disclosure is preferably a self-polishing antifouling composition. A "self-polishing antifouling composition" as used herein, refers to a coating composition combining the properties of an antifouling composition and a self-polishing composition as described above, i.e., the self-polishing antifouling composition slowly degrades over time and comprises a biocide agent which is released gradually.

The fouling control composition according to the present disclosure is free of copper or contains copper in an amount of less than 5 wt. % or less than 4.5 wt. % or less than 2.5 wt. % or less than 1 wt. %, based on the total weight of the fouling control composition. As used herein, the term "fouling control composition free of copper" refers to a fouling control composition which comprises 0 wt. % of copper, based on the total weight of the fouling control composition. The term "copper" as used herein includes metallic copper and copper contained in any copper-containing compounds. Copper-containing compounds include but are not limited to inorganic copper compounds, such as oxides, e.g., cuprous oxide, sulfides, and inorganic copper salts; organic copper salts; organo-copper compounds, i.e., organometallic compounds containing a carbon to copper chemical bond; and copper coordination compounds, e.g., copper pyrithione. It is understood that the amounts of copper indicated above are calculated on an elemental basis.

The fouling control composition according to the present disclosure contains a biocide. The term "biocide" as used herein refers to substance intended to disrupt, deter, render harmless, or exert a controlling effect on harmful organisms, preferably on marine organisms. The biocide may comprise a copper-containing biocide, e.g., cuprous oxide and/or copper pyrithione, in an amount corresponding to > 0 to less than 5 wt. % of copper as defined above and/or a copper-free biocide. Preferably, the fouling control composition according to the present disclosure comprises a copper-free biocide. The composition may comprise any suitable copper-free biocide known in the art. The fouling control composition may contain one or more than one copper-free biocide. The copper-free biocide may comprise an inorganic copper-free biocide, an organic copper-free biocide or a combination thereof. The organic copper-free biocide may comprise a metal-containing copper-free organic biocide, a metal-free organic biocide or a combination thereof.

The inorganic copper-free biocide may comprise any suitable inorganic copper-free biocide known in the art. Non-limiting examples of suitable inorganic copper-free biocides may include, but are not limited to, zinc sulfate, zinc oxide, nickel sulphate, silver chloride, silver nitrate and combinations thereof.

The metal-containing copper-free organic biocide may comprise any suitable metal-containing copper-free organic biocide known in the art. The metal-containing organic biocides may comprise an organo-zinc compound, an organo-manganese compound, an organo-bismuth compound and combinations thereof. Non-limiting examples of organo-zinc compounds may include, but are not limited to, zinc acetate, zinc carbamate, zinc dimethyl dithiocarbamate (ziram), zinc pyrithione, zinc ethylene bis(dithiocarbamate) (zineb), and combinations thereof. Non-limiting examples of organo-manganese compounds may include, but are not limited to, manganese ethylene bis dithiocarbamate (maneb), (polymeric) manganese ethylene bis dithiocarbamate complexed with zinc salt (mancozeb), and combinations thereof. Non-limiting examples of organo-bismuth compounds may include, but are not limited to, phenyl(bispyridyl)-bismuth dichloride.

The metal-free organic biocide may comprise any suitable metal-free organic biocide known in the art. The metal-free organic biocide may comprise a N-trihalomethylthiophthalimide, a trihalomethylthiosulphamide, a dithiocarbamic acid, a N-arylmaleimide, a 3-(substituted amino)-1 ,3-thiazolidine-2,4-dione, a dithiocyano compound, a triazine compound, an oxathiazine, or any combination thereof.

Examples of a N-trihalomethylthiophthalimide may include, but are not limited to, N-trichloromethylthiophthalimide, N-fluorodichloromethylthiophthalimide. and combinations thereof. Examples of a dithiocarbamic acid may include, but are not limited to, bis(dimethylthiocarbamoyl)disulphide, ammonium N-methyldithiocarbamate, ammonium ethylene-bis(dithiocarbamate), and combinations thereof. Examples of a trihalomethylthiosulphamide may include, but are not limited to, N-(dichlorofluoromethylthio)-N',N'-dimethyl-N-phenylsulphamide, N-(dichlorofluoromethylthio)-N',N'-dimethyl-N-(4-methylphenyl)sulphamide, and combinations thereof. Examples of a N-arylmaleimide may include, but are not limited to, N-(2,4,6-trichlorophenyl)maleimide, N-4-tolylmaleimide, N-3-chlorophenylmaleimide, N-(4-n-butylphenyl)maleimide, N-(anilinophenyl)maleimide, N-(2,3-xylyl)maleimide, and combinations thereof. Examples of a 3-(substituted amino)-1,3-thiazolidine-2,4-dione may include, but are not limited to, 2-(thiocyanomethylthio)-benzothiazole, 3-benzylideneamino-1, 3-thiazolidine-2,4-dione, 3-(4-methylbenzylideneamino)-1,3-thiazolidine-2,4-dione, 3-(2-hydroxybenzylideneamino)-1,3-thiazolidine-2,4-dione, 3-(4-dimethylaminobenzylideamino)-1,3-thiazolidine-2,4-dione, 3-(2,4-dichlorobenzylideneamino)-1,3-thiazolidine-2,4-dione, and combinations thereof. Examples of a dithiocyano compound may include, but are not limited to, dithiocyanomethane, dithiocyanoethane, 2,5-dithiocyanothiophene, and combinations thereof. Examples of a triazine compound may include, but are not limited to, 2-methylthio-4-butylamino-6-cyclopropylamino-s-triazine.

Examples of an oxathiazine may include, but are not limited to, 1,4,2-oxathiazines and their mono- and di-oxides such as disclosed in WO 98/05719: mono- and di-oxides of 1,4,2-oxathiazines with a substituent in the 3 position representing (a) phenyl; phenyl substituted with 1 to 3 substituents which are independently hydroxyl, halo, C₁-C₁₂ alkyl, C₅-C₆ cycloalkyl, trihalomethyl, phenyl, C₁-C₅ alkoxy, C₁-C₅ alkylthio, tetrahydropyranyloxy, phenoxy, C₁-C₄ alkyl carbonyl, phenyl carbonyl, C₁-C₄ alkylsulfinyl, carboxy or its alkali metal salt, C₁-C₄ alkoxycarbonyl, C₁-C₄ alkylaminocarbonyl, phenylaminocarbonyl, tolylaminocarbonyl, morpholinocarbonyl, amino, nitro, cyano, dioxolanyl or C₁-C₄ alkyloxyiminomethyl; naphthyl; pyridinyl; thienyl; furanyl; orthienyl orfuranyl substituted with one to three substituents which are independently C₁-C₄ alkyl, C₁-C₄ alkoxy, C₁-C₄ alkylthio, halo, cyano, formyl, acetyl, benzoyl, nitro, C₁-C₄ alkoxycarbonyl, phenyl, phenylaminocarbonyl or C₁-C₄ alkyloxyiminomethyl; or (b) a substituent of generic formula : 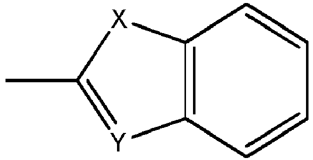 wherein X is oxygen or sulphur; Y is nitrogen, CH or C(C₁-C₄ alkoxy); and the C₆ ring may have one C₁-C₄ alkyl substituent; a second substituent which is C₁-C₄ alkyl or benzyl being optionally present in position 5 or 6.

The metal-free organic compound may comprise 2,4,5,6-tetrachloroisophthalonitrile, N,N- dimethyl-dichlorophenylurea, 4,5-dichloro-2-n-octyl-4-isothiazoline-3-one (dichlorooctylisothiazolinone, DCOIT), N,N-dimethyl-N'-phenyl-(N-fluorodichloromethylthio)-sulfamide, tetramethylthiuramdisulphide, 3-iodo-2- propinylbutyl carbamate, 2-(methoxycarbonylamino)benzimidazole, 2,3,5,6-tetrachloro-4-(methylsulphonyl)pyridine, diiodomethyl-p-tolyl sulphone, 2-(4-thiazolyl)benzimidazole, dihydroabietyl amine, N-methylol formamide, pyridine triphenylborane, 4-bromo-2-(4-chlorophenyl)-5-(trifluoromethyl)-1*H*-pyrrole-3-carbonitrile (tralopyril, e.g. ECONEA^{®})), *(RS*)-4-[1-(2,3-dimethylphenyl)ethyl]-*1H-*imidazole (medetomidine, e.g. SELEKTOPE^{®}), 2-(thiocyanomethylthio)-l,3-benzothiazole ((2- benzothiazolylthio)methyl thiocyanate, dichloro-N-((dimethylamino)sulfonyl)fluoro-N-(p- tolyl)methansulfenamide (tolylfluanid), N²-tert-butyl-N⁴-cyclopropyl-6-methylthio-1,3,5-triazine-2,4-diamine (cybutryne), 4-bromo-2-(4-chlorophenyl)-5-(trifluoromethyl)-1H-pyrrole-3- carbonitrile, or any combination thereof.

The fouling control composition typically comprises a copper-free biocide comprising zinc pyrithione, zinc ethylene bis(dithiocarbamate) (zineb), 4,5-dichloro-2-n-octyl-4-isothiazoline-3-one (DCOIT), 4-bromo-2-(4-chlorophenyl)-5-(trifluoromethyl)-1*H*-pyrrole-3-carbonitrile (tralopyril), *(RS)*-4-[1-(2,3-dimethylphenyl)ethyl]-1*H*-imidazole (medetomidine), or any combination thereof.

The fouling control composition may comprise from 0.001 to 20 wt.%, preferably from 0.01 to 15 wt. %, more from preferably 0.05 to 13 wt. %, and most preferably from 0.1 to 12 wt. % or from 0.5 to 10 wt. % of copper-free biocide, based on the total weight of the fouling control composition. It is understood that these weight percentages refer to the total amount of copper-free biocide present in the fouling control composition.

The fouling control composition may comprise a binder. The term "binder" as used herein, refers to the component or components of a coating that, upon cure or drying, form a continuous film on the coated substrate. The fouling control composition may comprise any suitable binder known in the art.

The fouling control composition of the present disclosure may be free of a (meth)acrylic block copolymer binder (a11) comprising monomer units derived from a silylester (a11-1) of (meth)acrylic acid having a silyl group represented by formula (I):

-(Si(R⁴R⁵)-O)ₙ-Si-(R¹R²R³) (I)

wherein each R⁴ and R⁵ is independently selected from -O-SiR¹R²R³, or
-O-(SiR⁴R⁵O)ₙ-SiR¹R²R³ or may be hydrogen or hydroxyl or may be independently selected from a C₁-C₂₀ hydrocarbyl radical,
R¹, R² and R³ each independently represent hydrogen, hydroxyl, or may be independently selected from a C₁-C₂₀ hydrocarbyl radical,
and when R⁴ or R⁵ is the radical -O-(SiR⁴R⁵O)ₙ-SiR¹R²R³, R⁴ and R⁵ within that said radical are not themselves -O-(SiR⁴R⁵O)ₙ-SiR¹R²R³,
and wherein each n independently represents a number of -Si(R⁴)(R⁵)-O- units from 1 to 1000 with the proviso that when no R⁴ and R⁵ group present in the silyl group includes a silicon atom n is at least 2, or may contain the (meth)acrylic block copolymer binder (a11) in an amount of less than 20 % wt. %, preferably less than 10 wt. %, more preferably less than 1 wt. %, based on the total weight of the fouling control composition.

The fouling control composition of the present disclosure may be free of a block copolymer binder (a1) comprising monomer units derived from a silylester (a1-1) of an ethylenically unsaturated sulfonic, phosphonic, or carboxylic acid, or any combination of such monomer units, wherein the silylgroup of the silylester (a1-1) is defined as the silyl group of the silylester (a11-1) above, or may contain the block copolymer binder (a1) in an amount of less than 1 wt. %, based on the total weight of the fouling control composition.

The fouling control composition of the present disclosure may be free of a block copolymer binder (a) comprising monomer units derived from a silylester (a-1) of an ethylenically unsaturated sulfonic, phosphonic, or carboxylic acid, or any combination of such monomer units, wherein the silylgroup of the silylester (a-1) contains at least 3 silicon atoms, or may contain the block copolymer binder (a) in an amount of less than 1 wt. %, based on the total weight of the fouling control composition.

The fouling control composition of the present disclosure may be free of a polysiloxane binder (b) or may contain a polysiloxane binder (b) in an amount of less than 20 wt. %, based on the total weight of the fouling control composition.

The fouling control composition of the present disclosure may be free of any binder comprising a siloxane group.

Typically, the fouling control composition of the present disclosure comprises a binder, preferably an organic binder. The binder may be present in an amount of from 10 to 70 wt. %, preferably from 20 to 50 wt. %, based on the total weight of the fouling control composition.

The binder may comprise a rosin binder, such as a gum rosin binder, a zinc resinate binder or a copper resinate binder; a non-aqueous dispersion binder; a (meth)acrylate-based binder; a zwitterion binder; a polyoxalate binder; a polyester based binder; a vinyl copolymer binder, or any combination thereof.

The (meth)acrylate-based binder may comprise a metal (meth)acrylate-based binder which is a (meth)acrylic copolymer comprising monomer units derived from a metal (meth)acrylate, such as a copper (meth)acrylate, a zinc (meth)acrylate, a magnesium (meth)acrylate, a calcium (meth)acrylate or any combination thereof.

The binder may comprise a block copolymer comprising a block of a polyester, a polyurethane, a polyether, a poly(meth)acrylate, a polyvinyl polymer, a polyepoxide, a polyamide, a polyurea or copolymers thereof.

The fouling control composition may further comprise a filler, a pigment, a rheology modifier, a thixotropic agent, a crosslinker, a catalyst, a solvent, a plasticizer, a defoamer, a fragrance, an adhesion agent, a buffer, a dispersing agent, a surfactant, a deaerator, a surface control additive, a surface active component, a hydrophobing agent, a wetting additive, an anti-cratering additive, a radiation curing additive, an anti-corrosion additive, a pH regulator, a levelling agent, a thickener, a stabilizer, an antistatic agent, an anti-graffiti additive or any combination of the foregoing.

The fouling control composition may comprise any suitable filler known in the art. Examples of suitable fillers include, but are not limited to barium sulfate, chalk, silica, calcium carbonate, calcite, dolomite, talc, mica, feldspar, kaolin, nephelin, perlite, magnesium oxide, quartz flour, clay, and combinations thereof.

The fouling control composition may comprise any suitable pigment known in the art, such as color pigments, bright pigments, and extender pigments. Examples of suitable pigments include, but are not limited to titanium oxide, carbon black, red iron oxide, zinc oxide, graphite, yellow iron oxide, red molybdate, yellow molybdate, zinc sulfide, tin oxide, antimony oxide, sodium aluminum sulfosilicates, quinacridones, phthalocyanine blue, phthalocyanine green, black iron oxide, indanthrone blue, cobalt aluminum oxide, carbazole dioxazine, chromium oxide, isoindoline orange, bis-acetoacet-o-tolidiole, benzimidazolone, quinaph- talone yellow, isoindoline yellow, tetrachloroisoindolinone, quinophthalone yellow, bentonite, chromium yellow, and combinations thereof.

The fouling control composition may comprise any suitable rheology modifier known in the art. Examples of suitable rheology modifiers include, but are not limited to fumed silica, precipitated silica, bentonite clay, clay, nano-clay, castor oils and derivatives thereof, polyamide wax, micronized amide wax, and combinations thereof.

The fouling control composition according to the present disclosure may comprise any suitable thixotropic agent known in the art. Examples of suitable thixotropic agents include, but are not limited to colloidal silica, hydrated aluminum silicate, aluminum tristearate, aluminum monostearate, xanthan gum, chrysotile, pyrogenic silica, hydrogenated castor oil, organo-modified clays, polyamide waxes, polyethylene waxes, and combinations thereof. The thixotropic additive may comprise a reaction product of reactants comprising an isocyanate compound, a mono-functional primary fatty amine, and a di-functional primary amine. The thixotropic additive may be formed in situ during formation of the fouling control coating composition.

The fouling control composition may comprise a crosslinker. The crosslinker may be selected depending on the binder used in the composition, so as to provide the desired crosslinking properties for the respective binder. Any suitable crosslinker known in the art for the respective binders may be used. Examples of suitable crosslinkers include, but are not limited to polyamines, polyamides, and combinations thereof.

The fouling control composition may comprise any suitable solvent known in the art, such as an organic solvent. Examples of suitable solvents include but are not limited to aliphatic hydrocarbons, cycloaliphatic hydrocarbons such as cyclohexane, aromatic hydrocarbons such as benzene, toluene, xylene, solvent naphtha 100, 150, 200, isoparaffinic fluids (such as Isopar H and/or Isopar V), those available from Exxon-Mobil Chemical Company under the SOLVESSO trade name, ketones such as methyl isobutyl ketone, methyl ethyl ketone, esters such as ethyl acetate, methoxypropyl acetate, ethoxypropyl acetate, n-butyl acetate, 2-ethoxyethyl acetate, ethoxyethyl propionate, ethylene glycol monoethylether acetate, white spirit, n-butanol, glycol ethers such as ethylene glycol monoethyl ether, propylene glycol monoethyl ether and combinations thereof. The solvent may be present in the fouling control composition in an amount of from 0 to 25 wt. %, based on the total weight of the composition. The solvent may be selected so as to provide the desired viscosity and/or biocide loading in the composition.

The fouling control composition may comprise any suitable plasticizer known in the art. Examples of suitable plasticizers include, but are not limited to tricresyl phosphate, phthalic diesters, chloroparaffins, polyvinylethyl ether resins, soybean oil, and combinations thereof.

The fouling control composition may comprise any suitable surfactant known in the art. Examples of suitable surfactants include but are not limited to derivatives of propylene oxide or ethylene oxide such as alkylphenolethylene oxide condensates (alkylphenol ethoxylates), ethoxylated monoethanolamides of unsaturated fatty acids such as ethoxylated monoethanolamides of linoleic acid, sodium dodecyl sulfate, soya lecithin, and combinations thereof.

The fouling control composition according to the present disclosure may comprise any suitable stabilizer known in the art. Examples of suitable stabilizers include but are not limited to substituted phenols, organ functional silanes and combinations thereof.

The fouling control composition is applied onto at least a part of an underwater structure, i.e., the underwater structure may be coated completely or partially by the process according to the present disclosure. The term "underwater structure" as used herein, refers to a structure that has an interface with water (salt water or fresh water) in its intended use, i.e., that is wholly or partially in contact with water or submerged in water either continuously, temporarily, or intermittently during its intended use. Examples of underwater structures may include, but are not limited to, metal substrates such as steel, iron, light alloy, or aluminum, and non-metal substrates, such as concrete, composite structures, or glass-fiber reinforced polyester. Examples of underwater structures may include, but are not limited to ships, ship hulls, boats, boat hulls, yachts, yacht hulls, submarines, tankers, tanker hulls, vessels, oil rigs, propellers, rudders, boottops, keels, centerboards, fins, hydrofoils, deck surfaces, buoys, onshore structures, offshore structures, fixed and mobile offshore platforms, offshore wind turbines, piers, wharves, jetties, fishing nets, cooling system surfaces, cooling water intake or discharge pipes, nautical beacons, floating beacons, floating breakwaters, docks, pipes, pipelines, tanks, water pipes in power stations, seaside industrial plants, fish preserving structures, aquatic constructions, harbor facilities, bridges, bells, plumbs, wheels, cranes, dredges, pumps, valves, wires, cables, ropes, ladders, pontoons, transponders, antennae, barges, periscopes, snorkels, gun mounts, gun barrels, launch tubes, mines, torpedoes and depth charges. The underwater structure according to the present disclosure preferably comprises a ship, a ship hull, a boat, a boat hull, a yacht, a yacht hull, a submarine, a tanker, a tanker hull, a vessel, an oil rig, a propeller, a rudder, a keel, a centerboard, a fin, a buoy, an offshore structure, a fixed or mobile offshore platform, an offshore wind turbine, a nautical beacon, a dredge, a pontoon, or a barge.

The underwater structure may comprise an at least partially coated substrate such as a substrate coated with a primer layer or a layering system comprising several coating layers, preferably comprising a primer layer. The primer layer or layering system may be any conventional primer layer or coating layers used conventionally with application of coating compositions to underwater structures. The primer layer may comprise an anticorrosive primer layer, an adhesion-promoting primer layer or combinations thereof. The underwater structure according to the present disclosure typically comprises a metal substrate coated with a one or two, preferably two anticorrosive primer layers. A tiecoat layer may be present on top of the primer layer(s) to improve adhesion between the primer layer(s) and the layer that will be obtained by applying the fouling control composition according to the process of the present disclosure.

The fouling composition according to the present disclosure may prevent or reduce hard fouling, soft fouling, or both. The term "hard fouling" as used herein, refers to the adhesion of calcareous fouling organisms including barnacles, encrusting bryozoans, mollusks, tube worms, and mussels. The term "soft fouling" as used herein, refers to the adhesion of non-calcareous fouling organisms including seaweed, hydroids, algae, sponges, anemones, tunicates, and biofilm slime.

The fouling control composition is applied by electrostatic spraying, typically it is applied at least to a surface of the underwater structure that is in contact with water or submerged in water continuously, temporarily, or intermittently during its intended use. During the electrostatic spraying process an electric field is generated between the underwater structure and a spraying device, for example by applying a high voltage of from 50 to 125 kV. During the spraying process the fouling control composition is atomized. The process according to the present disclosure may comprise electrostatic air spray atomization, electrostatic airless spray atomization, or electrostatic air-assisted airless atomization. The atomized particles are charged, typically charged negatively, in the strong electric field and are attracted to the grounded underwater structure.

Electrostatic air spray atomization uses a low-pressure fluid stream that is mixed with compressed air at the air cap to atomize material in a controlled manner. It is typically used for the application of low to medium viscosity fluids.

Electrostatic airless spray atomization utilizes the principle of fluid at high pressures atomizing through a very small nozzle orifice. Size and shape of the spray pattern along with the fluid quality is controlled by the nozzle orifice. Airless spray technology evolved after air spray to aid in faster application rates using higher delivery and heavier viscosities on larger parts.

Electrostatic air-assisted airless atomization uses a high-pressure fluid supply for atomization and compressed air at the air cap for pattern control. Air-assisted airless spray technology uses the airless spray principle to atomize the fluid at reduced fluid pressure with assisted atomizing air to aid in reducing pattern tailing and affect pattern shape. Air-assisted airless spray technology offers some of the desirable characteristics of both airless spray and air spray. The desirable characteristics include medium to high delivery rates, ability to spray heavy viscosities at low velocities, and high transfer efficiency. Air-assisted airless electrostatic atomization may solve many problems that arise with the use of high-viscosity and high-solids coatings, and other issues associated with heating and using higher fluid pressures to aid in the atomization of more viscous materials. The process according to the present disclosure preferably comprises electrostatic air-assisted airless atomization.

The electrostatic spraying may be conducted by any suitable spraying device known in the art for electrostatic spraying. The spraying device for electrostatic air-assisted airless atomization typically comprises a medium to high-pressure pump, an air cap connected to the air supply and including at least one nozzle. The nozzle may comprise a spray port at the tip of the nozzle typically having an inside diameter of from 0.2 to 4 mm, preferably from 0.25 to 2 mm, and more preferably from 0.3 to 0.6 mm.

In a process according to the present disclosure comprising electrostatic air-assisted airless atomization, the composition may be applied by using a material pressure of from 50 to 500 bar, preferably from 80 to 250 bar, and more preferably from 100 to 200 bar and/or an air assist pressure of from 0.5 to 5 bar, preferably from 1.5 to 4.0 bar, and more preferably from 2.0 to 3.5 bar. The pump pressure is selected depending on the shape of the underwater structure to be coated: If a good wrap-around effect is desired low pressure is used on the charged droplets since too high kinetic speed can be detrimental to the wrap-around properties. If the focus is on an efficient transfer, the pressure on the droplets can be higher; potential overspray clouds can be pulled towards the surface due to charged droplets. Too low pressure on the droplets can result in too low application speed. For the application on hulls of large vessels the targeted application rate is typically at least 15 s/m².

In a process according to the present disclosure comprising electrostatic air-assisted airless atomization, the pressure at the spray nozzle can range from 50 to 350 bar, typically from 100 to 200 bar.

The advantages of the electrostatic spraying process of the present disclosure are high transfer efficiency meaning a reduction of paint consumption, hazardous waste, costs and VOC emission. The electrostatic spraying process of the present disclosure further includes time savings due to the wrap-around effect. The fouling control composition, which is electrostatically charged by the spray gun, is attracted to all sides of the grounded structure. This wrap-around effect saves time, and depending on the structure, it may be coated from one side only. Due to the homogeneous alignment of the electrostatic field lines, the film thickness is extremely uniform. In addition, particles charged with the same polarity improve significantly the atomization power for creating an excellent surface finishing, i.e., a smooth surface and no air entrapment in the coat.

With the process of the present disclosure transfer efficiencies of 80 to 100 %, typically from 85 to 95 % or from 85 to 98 %, can be reached whereas the transfer efficiency of a non-electrostatic spraying process is often around 60 to 70 %.

### EXAMPLES

The following examples are intended to illustrate the present disclosure and should not be construed as limiting the disclosure in any way.

### Example 1

PPG Nexeon^{™} 810, available from PPG Coatings Belgium BV, is a copper-free self-polishing antifouling composition based on pure hydrolyzable binder. It contains from 5.0 to <10 wt. % of zinc pyrithione, from 1.0 to 5.0 wt. % of tralopyril, and <0.10 wt. % of medetomidine as biocides.

### Comparative Example 1

SIGMA SAILADVANCE^{™} NX, available from PPG Coatings Belgium BV, is a self-polishing antifouling composition based on hydrolyzable zinc methacrylate binder. It contains from 25 to 50 wt. % of cuprous oxide, from 1 to 4.4 wt. % of copper pyrithione, and < 1 wt. % of DCOIT as biocides.

### Examples 2 and 3

PPG Nexeon^{™} 810 was modified by adding PPG SIGMA THINNER 21-06 (comprising about 84 wt. % of toluene and about 15 wt. % of ethylbenzene as major components) and cuprous oxide (Purple copp 97N type 2A, available from American Chemet Corporation). Example 2 contained 3 wt. % of THINNER 21-06 and 2.5 wt. % of Cu₂O (= 2.22 wt. % of Cu), each based on the total amount of the fouling control composition. Example 3 contained 3 wt. % of THINNER 21-06 and 5 wt. % of Cu₂O (= 4.44 wt. % of Cu), each based on the total amount of the fouling control composition.

### Comparative Example 2

PPG Nexeon^{™} 810 was modified by adding PPG SIGMA THINNER 21-06 and cuprous oxide (Purple copp 97N type 2A, available from American Chemet Corporation). Comparative Example 4 contained 3 wt. % of THINNER 21-06 and 8 wt. % of Cu₂O (= 7.10 wt. % of Cu), each based on the total amount of the fouling control composition.

### Electrostatic spraying

### Experiment A

The fouling control compositions of Example 1 and Comparative Example 2 were sprayed onto grounded objects at 22 °C and 44 % relative humidity in the spray booth using a WAGNER Cobra 40-25 high pressure double diaphragm pump and a Wagner GM 5000EAC electrostatic AirCoat gun (nozzle no. 521 with 0.021 inch (0.53 mm) bore). The atomized particles were charged negatively by applying a maximum voltage of 80 kV.
Example 1: 120 bar (12,000 kPa) material pressure; 2.8 bar (280 kPa) air-assist pressure
Comparative Example 1: 140 bar (14,000 kPa) material pressure and 3 bar (300 kPa) air-assist pressure
Both fouling control compositions showed good atomization and film formation.

### Experiment B

The fouling control compositions of Examples 1 to 3 and Comparative Example 2 were sprayed onto grounded objects at 19 °C and 59 % relative humidity in the spray booth using a WAGNER Cobra 40-25 high pressure double diaphragm pump and a Wagner GM 5000EAC electrostatic AirCoat gun (nozzle no. 19/50 with 0.019 inch (0.48 mm) bore). The atomized particles were charged negatively by applying a maximum voltage of 80 kV.

The fouling control compositions were sprayed with 165 ± 15 bar (16,500 ± 1500 kPa) material pressure and 2.8 bar (280 kPa) air-assist pressure

### Test methods

### Wrap-around properties

Grounded steel pipes of 2 cm diameter were sprayed parallel to the pipe without and with electrostatic charge. The distance between gun and pipe was 10 cm. Wrap-around properties were checked by the amount of the formulation that covered the front and back of the pipe (wrap-around effect). A good wrap-around effect is an indication of the ease to charge the droplets. The pipes that were coated with the fouling control were inspected visually and percentage of coverage on the back is indicated in Tables 1 and 2 below.

### Transfer efficiency - parallel spraying

Grounded untreated tin plates (100 × 75 cm) were sprayed parallel to the plate without and with electrostatic charge. The distance between gun and plate was 10 cm. The amount of the paint pulled towards (attracted to) the grounded surface (plate) indicated the transfer efficiency. The plates that were coated with the fouling control compositions were inspected visually and percentage of coverage is indicated in Table 1 below.

### Overspray - frontal spraying

Grounded untreated tin plates (100 × 75 cm) were sprayed directly (in front) with electrostatic charge. The distance between gun and pipe was 20 to 25 cm. The plates that were coated with the fouling control compositions were inspected visually. Overspray was rated visually. The results are shown in Table 2 below.

**Table 1: Experiment A**

| | Wrap around effect (coverage) | | Transfer efficiency (coverage) | |
|---|---|---|---|---|
| | No electrostatic field | Electrostatic field | No electrostatic field | Electrostatic field |
| Example 1 | 0 % | 90 % | 5-10 % | 80-90 % |
| Comparative Example 1 | 0 % | 10 % | 5-10 % | 25 % |

Example 1 showed good coverage along the steel pipe on the front and back of the pipe, the paint pulled directly and efficiently all around the pipe (good wrap-around effect). Comparative Example 2 showed acceptable coverage on the front of the steel pipe but poor coverage on the back of the pipe (poor wrap around effect). Example 1 showed high transfer efficiency; the formulation was attracted to the metal plate and minor overspray was observed. Comparative Example 2 showed very poor transfer efficiency; the formulation was not attracted to the metal plate and considerable overspray was observed.

**Table 2: Experiment B**

| | Wrap around effect (coverage) | | Frontal spraying |
|---|---|---|---|
| | No electrostatic field | Electrostatic field | |
| Example 1 | 0 % | 90 % | No overspray |
| | | | No air entrapment |
| | | | Smooth surface |
| Example 2 (2.22 wt. % Cu) | 0 % | 90 % | No overspray |
| | | | No air entrapment |
| | | | Smooth surface |
| Example 3 (4.44 wt. % Cu) | 0 % | 70 % | Overspray 15 % |
| | | | No air entrapment |
| | | | Less smooth surface |
| Comp. Ex. 2 (7.10 wt. % Cu) | 0 % | 30 % | Overspray 20-30 % |
| | | | Air entrapment |
| | | | Rougher surface |

Example 1 and Example 2 showed excellent electrostatic spraying properties, i.e., good atomization, good wrap around effect, no overspray, no coating defects (no air entrapment) and high smoothness of the applied coat. Example 3 showed acceptable electrostatic spraying properties, i.e., acceptable atomization, less good but still significant wrap around effect, minor overspray, no coating defects (no air entrapment) and acceptable smoothness of the applied coat. Comparative Example 2 showed inacceptable electrostatic spraying properties, i.e., poor atomization, only moderate wrap around effect, considerable overspray, coating defects (air entrapment) and roughness of the applied coat.

### ASPECTS OF THE INVENTION

1. A process for applying a biocide-containing fouling control composition onto at least a part of an underwater structure by electrostatic spraying, wherein the fouling control composition is free of copper or contains copper in an amount of less than 5 wt. %, based on the total weight of the fouling control composition.
2. The process according to aspect 1, wherein the fouling control composition
   - is free of a (meth)acrylic block copolymer binder (a11) comprising monomer units derived from a silylester (a11-1) of (meth)acrylic acid having a silyl group represented by formula (I):

      -(Si(R⁴R⁵)-O)ₙ-Si-(R¹R²R³) (I)

      wherein each R⁴ and R⁵ is independently selected from -O-SiR¹R²R³, or -O-(SiR⁴R⁵O)ₙ-SiR¹R²R³ or may be hydrogen or hydroxyl or may be independently selected from a C₁-C₂₀ hydrocarbyl radical, and R¹, R² and R³ each independently represent hydrogen, hydroxyl, or may be independently selected from a C₁-C₂₀ hydrocarbyl radical, and when R⁴ or R⁵ is the radical -O-(SiR⁴R⁵O)ₙ-SiR¹R²R³, R⁴ and R⁵ within that said radical are not themselves -O-(SiR⁴R⁵O)ₙ-SiR¹R²R³, and wherein each n independently represents a number of -Si(R⁴)(R⁵)-O-units from 1 to 1000 with the proviso that when no R⁴ and R⁵ group present in the silyl group includes a silicon atom n is at least 2, or
   - contains the (meth)acrylic block copolymer binder (a11) in an amount of less than 20 % wt. %, preferably less than 10 wt. %, more preferably less than 1 wt. %, based on the total weight of the fouling control composition.
3. The process according to aspect 2, wherein the fouling control composition
   - is free of a block copolymer binder (a1) comprising monomer units derived from a silylester (a1-1) of an ethylenically unsaturated sulfonic, phosphonic, or carboxylic acid, or any combination of such monomer units, wherein the silylgroup of the silylester (a1-1) is defined as the silyl group of the silylester (a11-1) in aspect 2, or
   - contains the block copolymer binder (a1) in an amount of less than 1 wt. %, based on the total weight of the fouling control composition
4. The process according to aspect 3, wherein the fouling control composition
   - is free of a block copolymer binder (a) comprising monomer units derived from a silylester (a-1) of an ethylenically unsaturated sulfonic, phosphonic, or carboxylic acid, or any combination of such monomer units, wherein the silylgroup of the silylester (a-1) contains at least 3 silicon atoms, or
   - contains the block copolymer binder (a) in an amount of less than 1 wt. %, based on the total weight of the fouling control composition.
5. The process according to any of the preceding aspects, wherein the fouling control composition is free of a polysiloxane binder (b) or contains a polysiloxane binder (b) in an amount of less than 20 wt. %, based on the total weight of the fouling control composition.
6. The process according to any of the preceding aspects, wherein the fouling control composition is a self-polishing antifouling composition.
7. The process according to any of the preceding aspects, wherein the fouling control composition comprises a binder, preferably an organic binder.
8. The process according to aspect 7, wherein the binder is present in the fouling control composition in an amount of from 10 to 70 wt. %, preferably from 20 to 50 wt. %, based on the total weight of the fouling control composition.
9. The process according to aspect 7 or 8, wherein the binder comprises a rosin binder, such as a gum rosin binder, a zinc resinate binder or a copper resinate binder; a non-aqueous dispersion binder; a (meth)acrylate-based binder; a zwitterion binder; a polyoxalate binder; a polyester based binder; a vinyl copolymer binder, or any combination thereof.
10. The process according to aspect 9, wherein the (meth)acrylate-based binder comprises a metal (meth)acrylate-based binder which is a (meth)acrylic copolymer comprising monomer units derived from a metal (meth)acrylate, such as a copper (meth)acrylate, a zinc (meth)acrylate, a magnesium (meth)acrylate, a calcium (meth)acrylate or any combination thereof.
11. The process according to any of aspects 7 to 10, wherein the binder comprises a block copolymer comprising a block of a polyester, a polyurethane, a polyether, a poly(meth)acrylate, a polyvinyl polymer, a polyepoxide, a polyamide, a polyurea or copolymers thereof.
12. The process according to aspect 9 or 10, wherein the binder comprises a rosin binder, such as a gum rosin binder, or a metal (meth)acrylate-based binder which is a (meth)acrylic copolymer comprising monomer units derived from a metal (meth)acrylate, such as a zinc (meth)acrylate.
13. The process according to any of the preceding aspects, wherein the fouling control composition is free of any binder comprising a siloxane group.
14. The process according to any of the preceding aspects, wherein the fouling control composition comprises a copper-free biocide.
15. The process according to aspect 14, wherein the fouling control composition comprises one or more than one copper-free biocide.
16. The process according to any of the preceding aspects, wherein the biocide comprises an inorganic copper-free biocide, an organic copper-free biocide or a combination thereof.
17. The process according to any of the preceding aspects, wherein the biocide comprises a combination of an inorganic copper-free and an organic copper-free biocide.
18. The process according to aspect 16 or 17, wherein the organic copper-free biocide comprises a metal-containing copper-free organic biocide or a metal-free organic biocide or a combination thereof.
19. The process according to aspect 16 or 17, wherein the inorganic copper-free biocide comprises zinc sulfate, zinc oxide, nickel sulphate, silver chloride, silver nitrate or a combination thereof.
20. The process according to aspect 18, wherein the metal-containing copper-free organic biocide comprises an organo-zinc compound, an organo-manganese compound, an organo-bismuth compound or a combination thereof.
21. The process according to aspect 20, wherein the organo-zinc compound comprises zinc acetate, zinc carbamate, zinc dimethyl dithiocarbamate (ziram), zinc pyrithione, zinc ethylene bis(dithiocarbamate) (zineb) or a combination thereof.
22. The process according to aspect 20, wherein the organo-manganese compound comprises manganese ethylene bis dithiocarbamate (maneb), (polymeric) manganese ethylene bis dithiocarbamate complexed with zinc salt (mancozeb).
23. The process according to aspect 20, wherein the organo-bismuth compound comprises phenyl(bispyridyl)-bismuth dichloride.
24. The process according to aspect 18, wherein the metal-free organic biocide comprises a N-trihalomethylthiophthalimide, such as a N-trichloromethylthiophthalimide or a N-fluorodichloromethylthiophthalimide, a trihalomethylthiosulphamide, such as a N-trichloromethylthiophthalimide or a N-fluorodichloromethylthiophthalimide, a dithiocarbamic acid, such as bis(dimethylthiocarbamoyl)disulphide, ammonium N-methyldithiocarbamate, or ammonium ethylene-bis(dithiocarbamate), a N-arylmaleimide, such as N-(2,4,6-trichlorophenyl)maleimide, N-4 tolylmaleimide, N-3 chlorophenylmaleimide, N-(4-n-butylphenyl)maleimide, N-(anilinophenyl)maleimide, or N-(2,3-xylyl)maleimide, a 3-(substituted amino)-1,3-thiazolidine-2,4-dione such as 2-(thiocyanomethylthio)-benzothiazole, 3-benzylideneamino-1,3-thiazolidine-2,4-dione, 3-(4-methylbenzylideneamino)-1,3-thiazolidine-2,4-dione, 3-(2-hydroxybenzylideneamino)-1,3- thiazolidine-2,4-dione, 3-(4-dimethylaminobenzylideamino)-1,3-thiazolidine-2,4-dione, or 3- (2,4-dichlorobenzylideneamino)-1,3-thiazolidine-2,4-dione, a dithiocyano compound, such as dithiocyanomethane, dithiocyanoethane, and 2,5-dithiocyanothiophene, a triazine compound, such as 2-methylthio-4-butylamino-6-cyclopropylamino-s-triazine, an oxathiazine, such as a 1,4,2-oxathiazine, a mono- or dioxide of ,4,2-oxathiazine, 2,4,5,6-tetrachloroisophthalonitrile, N,N- dimethyl-dichlorophenylurea, 4,5-dichloro-2-n-octyl-4-isothiazoline-3-one (DCOIT), N,N-dimethyl-N'- phenyl-(N-fluorodichloromethylthio)-sulfamide, tetramethylthiuramdisulphide, 3-iodo-2-propinylbutyl carbamate, 2-(methoxycarbonylamino)benzimidazole, 2,3,5,6-tetrachloro-4-(methylsulphonyl)pyridine, diiodomethyl-p-tolyl sulphone, 2-(4-thiazolyl)benzimidazole, dihydroabietyl amine, N-methylol formamide, pyridine triphenylborane, 4-bromo-2-(4-chlorophenyl)-5-(trifluoromethyl)-1*H*-pyrrole-3-carbonitrile (tralopyril), *(RS)*-4-[1-(2,3-dimethylphenyl)ethyl]-1*H*-imidazole (medetomidine), 2-(thiocyanomethylthio)-1,3-benzothiazole ((2- benzothiazolylthio)methyl thiocyanate, dichloro-N-((dimethylamino)sulfonyl)fluoro-N-(p- tolyl)methansulfenamide (tolylfluanid), N²-tert-butyl-N⁴-cyclopropyl-6-methylthio-1,3,5-triazine-2,4-diamine (cybutryne), 4-bromo-2-(4-chlorophenyl)-5-(trifluoromethyl)-1H-pyrrole-3-carbonitrile, or a combination of any of the foregoing.
25. The process according to any of the preceding aspects, wherein the biocide comprises zinc pyrithione, zinc ethylene bis(dithiocarbamate) (zineb), 4,5-dichloro-2-n-octyl-4-isothiazoline-3-one (DCOIT), 4-bromo-2-(4-chlorophenyl)-5-(trifluoromethyl)-1*H*-pyrrole-3-carbonitrile (tralopyril), *(RS)-*4-[1-(2,3-dimethylphenyl)ethyl]-1*H*-imidazole (medetomidine), or a combination of any of the foregoing.
26. The process according to any of aspects 14 to 25, wherein the fouling control composition comprises from 0.001 to 20 wt.%, preferably from 0.01 to 15 wt. %, more preferably from 0.05 to 13 wt. %, and most preferably from 0.1 to 12 wt. % or from 0.5 to 10 wt. % of copper-free biocide, based on the total weight of the fouling control composition.
27. The process according to any of the preceding aspects, wherein the fouling control composition further comprises a filler, a pigment, a rheology modifier, a thixotropic agent, a crosslinker, a catalyst, a solvent, a plasticizer, a defoamer, a fragrance, an adhesion agent, a buffer, a dispersing agent, a surfactant, a deaerator, a surface control additive, a surface active component, a hydrophobing agent, a wetting additive, an anti-cratering additive, a radiation curing additive, an anti-corrosion additive, a pH regulator, a levelling agent, a thickener, a stabilizer, an antistatic agent, an anti-graffiti additive or any combination of the foregoing.
28. The process according to any of the preceding aspects, wherein the underwater structure comprises a ship, a ship hull, a boat, a boat hull, a yacht, a yacht hull, a submarine, a tanker, a tanker hull, a vessel, an oil rig, a propeller, a rudder, a keel, a centerboard, a fin, a buoy, an offshore structure, a fixed or mobile offshore platform, an offshore wind turbine, a nautical beacon, a dredge, a pontoon, or a barge.
29. The process according to any of the preceding aspects, wherein the underwater structure comprises a coated substrate such as a substrate coated with a primer layer, e.g., an anticorrosive primer layer, and optionally further coating layers, such as a substrate coated with two anticorrosive primer layers, and a tiecoat layer.
30. The process according to any of the preceding aspects, wherein the fouling control composition prevents hard fouling or soft fouling or both of the foregoing.
31. The process according to any of the preceding aspects, wherein the fouling control composition is applied at least to a surface of the underwater structure that is in contact with water or submerged in water continuously, temporarily, or intermittently during its intended use.
32. The process according to any of the preceding aspects, comprising generating an electric field between the underwater structure and a spraying device.
33. The process according to aspect 32, wherein the spraying device comprises a pump.
34. The process according to any of the preceding aspects comprising electrostatic air-assisted airless atomization.
35. The process according to aspect 34, wherein the composition is applied using an air assist pressure of from 0.5 to 5 bar, preferably from 1.50 to 4.0 bar, and more preferably from 2.0 to 3.5 bar.
36. The process according to aspect 34 or 35, wherein the composition is applied using a material pressure of from 50 to 500 bar, preferably from 80 to 250 bar, and more preferably from 100 to 200 bar.
37. The process according to any of aspects 34 to 36, wherein the spraying device comprises at least one nozzle.
38. The process according to aspect 37, wherein the inside diameter of the spray port at the tip of the nozzle is in the range of from 0.2 to 4 mm, preferably from 0.25 to 2 mm, and more preferably from 0.3 to 0.6 mm.
39. The process according to aspect 37 or 38, wherein the composition is applied using a pressure at the spray nozzle of from 50 to 350 bar, preferably from 100 to 200 bar.
40. The process according to any of the preceding aspects, wherein the fouling control composition is free of copper or contains copper in an amount of less than 4.5 wt. %, based on the total weight of the fouling control composition.
41. The process according to any of the preceding aspects, wherein the fouling control composition is free of copper or contains copper in an amount of less than 2.5 wt. %, based on the total weight of the fouling control composition.
42. The process according to any of the preceding aspects, wherein the fouling control composition is free of copper.
43. Use of a biocide-containing fouling control composition which is free of copper or contains copper in an amount of less than 5 wt. %, based on the total weight of the fouling control composition, for application onto at least a part of an underwater structure by electrostatic spraying.
44. The use according to aspect 43, wherein the electrostatic spraying is performed by the process according to any of aspects 2 to 42.
45. A coated underwater structure obtainable by the process of any of aspects 1 to 42.

## Claims

1. A process for applying a biocide-containing fouling control composition onto at least a part of an underwater structure by electrostatic spraying, wherein the fouling control composition is free of copper or contains copper in an amount of less than 5 wt. %, based on the total weight of the fouling control composition.

2. The process according to claim 1, wherein the fouling control composition
• is free of a (meth)acrylic block copolymer binder (a11) comprising monomer units derived from a silylester (a11-1) of (meth)acrylic acid having a silyl group represented by formula (I):
-(Si(R⁴R⁵)-O)ₙ-Si-(R¹R²R³) (I)
wherein each R⁴ and R⁵ is independently selected from -O-SiR¹R²R³, or -O-(SiR⁴R⁵O)ₙ-SiR¹R²R³ or may be hydrogen or hydroxyl or may be independently selected from a C₁-C₂₀ hydrocarbyl radical, and R¹, R² and R³ each independently represent hydrogen, hydroxyl, or may be independently selected from a C₁-C₂₀ hydrocarbyl radical, and when R⁴ or R⁵ is the radical -O-(SiR⁴R⁵O)ₙ-SiR¹R²R³, R⁴ and R⁵ within that said radical are not themselves -O-(SiR⁴R⁵O)ₙ-SiR¹R²R³, and wherein each n independently represents a number of -Si(R⁴)(R⁵)-O-units from 1 to 1000 with the proviso that when no R⁴ and R⁵ group present in the silyl group includes a silicon atom n is at least 2, or
• contains the (meth)acrylic block copolymer binder (a11) in an amount of less than 20 % wt. %, preferably less than 10 wt. %, more preferably less than 1 wt. %, based on the total weight of the fouling control composition.

3. The process according to claim 2, wherein the fouling control composition
• is free of a block copolymer binder (a1) comprising monomer units derived from a silylester (a1-1) of an ethylenically unsaturated sulfonic, phosphonic, or carboxylic acid, or any combination of such monomer units, wherein the silylgroup of the silylester (a1-1) is defined as the silyl group of the silylester (a11-1) in claim 2, or
• contains the block copolymer binder (a) in an amount of less than 1 wt. %, based on the total weight of the fouling control composition

4. The process according to claim 3, wherein the fouling control composition
• is free of a block copolymer binder (a) comprising monomer units derived from a silylester (a-1) of an ethylenically unsaturated sulfonic, phosphonic, or carboxylic acid, or any combination of such monomer units, wherein the silylgroup of the silylester (a-1) contains at least 3 silicon atoms, or
• contains the block copolymer binder (a) in an amount of less than 1 wt. %, based on the total weight of the fouling control composition.

5. The process according to any of the preceding claims, wherein the fouling control composition is free of a polysiloxane binder (b) or contains a polysiloxane binder (b) in an amount of less than 20 wt. %, based on the total weight of the fouling control composition.

6. The process according to any of the preceding claims, wherein the fouling control composition is a self-polishing antifouling composition.

7. The process according to any of the preceding claims, wherein the fouling control composition comprises an organic binder, preferably in an amount of from 10 to 70 wt. %, and more preferably from 20 to 50 wt. %, based on the total weight of the fouling control composition.

8. The process according to claim 7, wherein the organic binder comprises a rosin binder, such as a gum rosin binder, a zinc resinate binder or a copper resinate binder; a non-aqueous dispersion binder; a (meth)acrylate-based binder; a zwitterion binder; a polyoxalate binder; a polyester based binder; a vinyl copolymer binder, or any combination thereof and wherein the (meth)acrylate-based binder preferably comprises a metal (meth)acrylate-based binder which is a (meth)acrylic copolymer comprising monomer units derived from a metal (meth)acrylate, such as a copper (meth)acrylate, a zinc (meth)acrylate, a magnesium (meth)acrylate, a calcium (meth)acrylate or any combination thereof.

9. The process according to any of the preceding claims, wherein the fouling control composition comprises one or more than one copper-free biocide, preferably comprising zinc pyrithione, zinc ethylene bis(dithiocarbamate) (zineb), 4,5-dichloro-2-n-octyl-4-isothiazoline-3-one (DCOIT), 4-bromo-2-(4-chlorophenyl)-5-(trifluoromethyl)-1*H*-pyrrole-3-carbonitrile (tralopyril), *(RS)-*4-[1-(2,3-dimethylphenyl)ethyl]-1*H*-imidazole (medetomidine), or a combination of any of the foregoing.

10. The process according to claim 9, wherein the fouling control composition comprises from 0.001 to 20 wt.%, preferably from 0.01 to 15 wt. %, more preferably from 0.05 to 13 wt. %, and most preferably from 0.1 to 12 wt. % of copper-free biocide, based on the total weight of the fouling control composition.

11. The process according to any of the preceding claims, wherein the underwater structure comprises a ship, a ship hull, a boat, a boat hull, a yacht, a yacht hull, a submarine, a tanker, a tanker hull, a vessel, an oil rig, a propeller, a rudder, a keel, a centerboard, a fin, a buoy, an offshore structure, a fixed or mobile offshore platform, an offshore wind turbine, a nautical beacon, a dredge, a pontoon, or a barge.

12. The process according to any of the preceding claims, comprising electrostatic air-assisted airless atomization, wherein the composition is preferably applied using an air assist pressure of from 0.5 to 5 bar, more preferably from 1.50 to 4.0 bar, and most preferably from 2.0 to 3.5 bar and/or using a material pressure of from 50 to 500 bar, more preferably from 80 to 250 bar, and most preferably from 100 to 200 bar.

13. The process according to claim 12, wherein the spraying device comprises at least one nozzle and wherein the inside diameter of the spray port at the tip of the nozzle preferably is in the range of from 0.2 to 4 mm, more preferably from 0.25 to 2 mm, and most preferably from 0.3 to 0.6 mm.

14. Use of a biocide-containing fouling control composition which is free of copper or contains copper in an amount of less than 5 wt. %, based on the total weight of the fouling control composition, for application onto at least a part of an underwater structure by electrostatic spraying, wherein the electrostatic spraying is preferably performed by the process according to any of claims 2 to 13.

15. A coated underwater structure obtainable by the process of any of claims 1 to 13.
